# EUROPÄISCHE PATENTSCHRIFT

(11) **EP 1 102 939 B1**
(45) Veröffentlichungstag und Bekanntmachung des Hinweises auf die Patenterteilung: **30.07.2003**
(21) Anmeldenummer: 99927986.2
(22) Anmeldetag: 15.06.1999
(51) Int. Cl.: F16D 65/12

(54) **BREMSSCHEIBE, INSBESONDERE FÜR EIN KRAFTFAHRZEUG**
BRAKE DISC, ESPECIALLY FOR AN AUTOMOBILE
DISQUE DE FREIN, NOTAMMENT POUR AUTOMOBILE

(30) Priorität: 09.07.1998 DE 19830669
(43) Veröffentlichungstag der Anmeldung: 30.05.2001
(73) Patentinhaber: DaimlerChrysler AG, 70567 Stuttgart (DE)
(72) Erfinder: KECK, Volker, D-70327 Stuttgart (DE); SOKOLOWSKY, Detlef, D-73732 Esslingen (DE)
(86) Internationale Anmeldenummer: EP9904120
(87) Internationale Veröffentlichungsnummer: WO00003152

(56) Entgegenhaltungen:
- DE-A- 4 419 754
- DE-A- 4 419 757
- DE-A- 4 420 758
- US-A- 5 007 508

## Beschreibung

Die vorliegende Erfindung betrifft eine Bremsscheibe, insbesondere für ein Kraftfahrzeug, nach dem Oberbegriff des Patentanspruchs 1.

Derartige Bremsscheiben sind bekannt aus z.B. DE-A-44 20 758, und finden als Bestandteil von Bremsanlagen insbesondere bei Kraftfahrzeugen des Rennsports Verwendung. Hierbei wird ein Reibring aus kohlenstoffaserverstärkten Kohlenstoffmaterial (C/C) durch eine Anzahl von Verbindungselementen mit einem Bremsscheibentopf aus massivem Stahl verbunden. Die Verbindungselemente aus Schrauben, Distanzhülsen, Muttern, Gleitschuhen, Unterlegscheiben und dergleichen dienen dazu, auftretende Drehmomente zu übertragen und die unterschiedliche Wärmeausdehnung von Bremsscheibentopf und Reibring auszugleichen. Durch diese schwimmende Lagerung wird eine Verformung (Schirmung) und mechanische Beanspruchung des Reibrings durch den sich bei Wärme stärker ausdehnenden Bremsscheibentopf vermieden. Nachteilig bei dieser Konstruktion ist der durch die Vielzahl der zum Teil schwierig herstellbaren Verbindungselemente (z.B. Distanzhülsen oder Gleitschuhe) verursachte hohe Kostenaufwand, der auf dem Gebiet des Rennwagenbaus in Kauf genommen wird, für die Massenfertigung von Fahrzeugen aus Kostengründen jedoch nicht zu verwirklichen ist.

Des weiteren wird der gegenüber herkömmlichen Grauguß-Bremsscheiben erzielbare Gewichtsvorteil des Reibringmaterials C/C durch Einsatz der vielen Verbindungselemente und des massiven, schweren Bremsscheibentopfes wenigstens teilweise wieder aufgehoben.

Aus der DE-OS 1 775 685 ist eine Bremsscheibe, bestehend aus einem Nabenteil und einem Bremsring bekannt, bei der Bremsring und Scheibennabe Fortsätze und/oder Aussparungen aufweisen, die ineinandergreifen, wobei Bremsring und Nabe durch sich axial erstreckende Verbindungselemente, wie beispielsweise Schrauben, Nieten, Bolzen oder dergleichen gegeneinander verspannt sind. Auch gemäß dieser Konstruktion wird es als notwendig erachtet, Schrauben bzw. Nieten oder Bolzen zu verwenden, wodurch das Gewicht der Bremsscheibe insgesamt erhöht ist.

Aus der DE 35 15 512 A1 ist ein Reibring, insbesondere für Scheiben- oder Trommelbremsen bekannt, welcher vollständig aus Keramik hergestellt ist. Um bei einer diesen Reibring verwendenden Trommelbremse eine drehfeste Verbindung zwischen Reibring und Bremsgehäuse zu erreichen, ist vorgesehen, das Bremsgehäuse am Innenumfang mit konkaven Vorsprüngen und den Reibring am Außenumfang mit konvexen Ausnehmungen zu versehen, wobei Vorsprünge und Ausnehmungen ineinandergreifen. Zur axialen Sicherung der beiden Bauteile gegeneinander ist am Außenrand der topfförmigen Nabe ein Flansch vorgesehen, der eine Ringnut aufweist, in die sich der Reibring erstreckt. Das Ausbilden der Nabe mit einem derartigen Flansch sowie das paßgenaue Einbringen des Reibrings in die Ringnut des Flansches muß als sehr aufwendig angesehen werden.

Aus der US-PS 5,007,508 ist ein Bremsscheibensystem bekannt, bei dem eine Bremsscheibe einen inneren Befestigungsring aufweist, auf dessen Innenumfang Ausnehmungen ausgebildet sind. Die Bremsscheibe ist in axial schwimmender Weise auf einem Bremsscheibentopf befestigbar. Zur Gewährleistung dieser Befestigung sind in den Ausnehmungen anordenbare Quadrantstücke und als Verspannungsmittel Schrauben vorgesehen. Diese Anordnung weist eine Vielzahl von Einzelteilen auf, und ist beispielsweise durch Vorsehen von Schrauben zur Befestigung der jeweiligen Teile mit einem erhöhten Gewicht behaftet.

Aufgabe der vorliegenden Erfindung ist daher die Schaffung einer Bremsscheibe, insbesondere für ein Kraftfahrzeug, welche aus möglichst wenigen Teilen einfach und kostengünstig herstellbar ist und dabei ein möglichst geringes Gewicht aufweist.

Diese Aufgabe wird gelöst durch eine Bremsscheibe mit den Merkmalen des Patentanspruchs 1.

Bevorzugte Ausgestaltungen der erfindungsgemäßen Bremsscheibe sind Gegenstand der Unteransprüche.

Zur axialen Sicherung des Reibrings bezüglich des Bremsscheibentopfes sind elastisch verformbare Teile an dem Wandungsbereich des Bremsscheibentopfes ausgebildet. Derartige Teile können in einfacher Weise beispielsweise mittels Stanzen aus dem Wandungsbereich des Bremsscheibentopfes geformt werden. Es ist hierbei in einfacher Weise möglich, ein gewünschtes axiales Spiel (bezüglich der gemeinsamen Mittelachse) zwischen Bremsscheibentopf und Reibring zur Verfügung zu stellen. Bei Ausbildung derartiger verformbarer Teile kann auf zusätzliche axiale Sicherungsmittel, beispielsweise Schrauben oder Bolzen, verzichtet werden.

Zweckmäßigerweise sind die Vorsprünge und die Teile als mittels Stanzen oder Schneiden und anschließendem Umbiegen von Abschnitten der Wandung des Bremsscheibentopfes erzeugte Laschen ausgebildet. Derartige Laschen sind in sehr preiswerter und einfacher Weise herstellbar. Die axiale Sicherung erfolgt also lediglich durch Umformen von Laschen, die aus der Wandung des Bremsscheibentopfes geformt sind.

Die in dem Reibring ausgebildeten Aussparungen weisen in ihrem Bodenbereich schlitzartige Verlängerungen auf. Wenn die Vorsprünge bzw. Laschen in diese schlitzartigen Verlängerungen eingreifen, ist eine besonders wirkungsvolle Drehmomentübertragung zwischen Reibring und Bremsscheibentopf erzielbar. Dies liegt daran, daß die notwendige Spielfreiheit zwischen den Laschen und den entsprechenden Aussparungen des Reibrings in sehr einfacher Weise herstellbar ist, da die Breite der Verlängerungen (Schlitzbreite) entsprechend der toleranzgeringen Blechstärke der Laschen gewählt werden kann. Die ungehinderte radiale Ausdehnung des Laschen bei Erwärmung wird auch hier dadurch gewährleistet, daß die Verlängerungen in radialer Richtung etwas länger ausgebildet sind als die in sie eingreifenden Laschen.

Gemäß einer weiteren bevorzugten Ausführungsform sind die Vorsprünge in Form eines in den Wandungsbereich des Bremsscheibentopfes geprägten Zahnprofils ausgebildet. Ein derartiges Zahnprofil, welches insbesondere rechteckig geformte Zähne aufweist, ist in einfacher Weise in den Wandungsbereich des Bremsscheibentopfes einprägbar, ohne die mechanische Stabilität des Bremsscheibentopfes zu beeinträchtigen.

Zweckmäßigerweise ist die axiale Sicherung des Reibrings an dem Bremsscheibentopf mittels unterhalb und/oder oberhalb des Zahnprofils in den Wandungsbereich des Bremsscheibentopfes geprägter Durchstellungen bzw. Ausprägungen bewerkstelligt. Durch diese Maßnahme ist das Ausmaß des axialen Spiels zwischen Bremsscheibentopf und Reibring in einfacher Weise wählbar. Auch hier erfolgt die axiale Sicherung des Reibringes am Bremsscheibentopf lediglich durch Umformung von Abschnitten der Wandung des Bremsscheibentopfes zu Durchstellungen.

Vorteilhafterweise ist der Reibring aus einem nichtmetallischen Werkstoff, und der Bremsscheibentopf aus einem metallischen Werkstoff hergestellt. Als Werkstoffe für den Reibring werden kohlefaserverstärkte Kohlenstoffmaterialien (C/C), oder faserverstärkte Verbundkeramiken auf der Basis von Siliziumkarbid (C/C-SiC) bevorzugt. Derartige Materialien sind wesentlich leichter als beispielsweise herkömmliche Graugußlegierungen. Der Bremsscheibentopf besteht vorzugsweise aus Nirosta-Stahlblech, welches ein verhältnismäßig geringes Gewicht bei guter mechanischer Stabilität aufweist.

Bevorzugte Ausführungsformen der erfindungsgemäßen Bremsscheibe werden nun anhand der Zeichnung im einzelnen erläutert. In dieser zeigt
- Fig. 1: eine Draufsicht auf eine erste Ausführungsform der erfindungsgemäßen Bremsscheibe,
- Fig. 2: einen Querschnitt entlang der Linie 2-2 der Fig. 1, wobei Reibring und Bremsscheibentopf in noch nicht zusammengefügtem Zustand dargestellt sind,
- Fig. 3: eine Draufsicht auf eine zweite Ausführungsform der erfindungsgemäßen Bremsscheibe,
- Fig. 4: einen Querschnitt entlang der Linie 4-4 der Fig. 3, wobei Reibring und Bremsscheibentopf in noch nicht zusammengefügtem Zustand dargestellt sind,
- Fig. 5: eine Draufsicht auf eine dritte Ausführungsform der erfindungsgemäßen Bremsscheibe,
- Fig. 6: einen Querschnitt entlang der Linie 6-6 der Fig. 5, wobei Reibring und Bremsscheibentopf in noch nicht zusammengefügtem Zustand dargestellt sind,
- Fig. 7: eine Draufsicht auf eine Bremsscheibe gemäß dem Stand der Technik, und
- Fig. 8: einen Teilquerschnitt entlang der Linie 8-8 der Fig. 7.

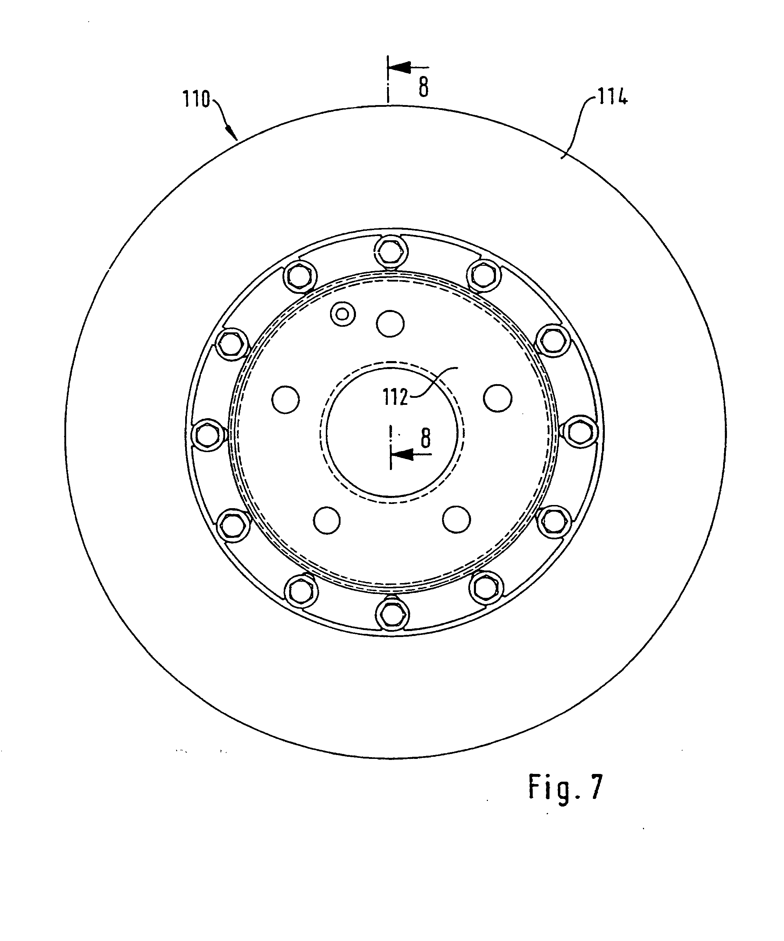

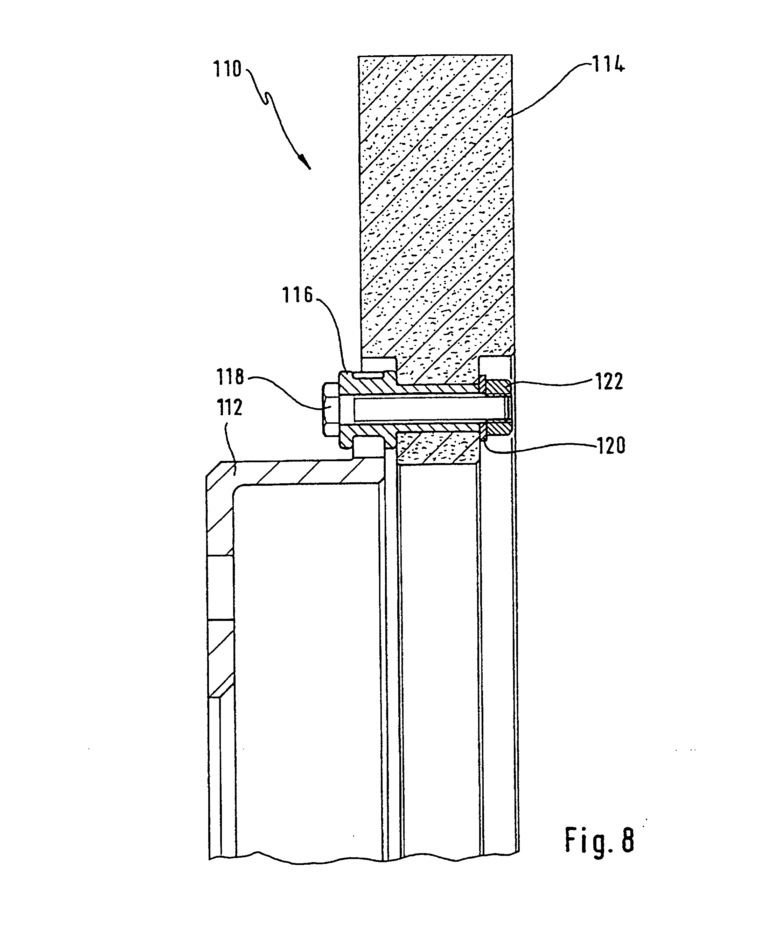

Die Darstellungen der Fig. 7 und 8 zeigen schematisch eine Bremsscheibe 110, wie sie aus dem Stand der Technik bekannt ist und beispielsweise im Rennsport als sogenannte Karbon-Bremsscheibe Anwendung findet. Die bekannte Bremsscheibe 110 umfaßt einen Bremsscheibentopf 112 aus massivem Stahl und einen am Umfang des Topfes 112 befestigten Reibring 114 aus Kohlenstoffwerkstoff. Der Reibring 114 ist mittels Distanzbuchsen 116 und entsprechenden Bohrungen in dem Reibring, sowie durch die Distanzbuchsen 116 gesteckte Sechskantschrauben 118, die mit Sechskantmuttern 122 und Unterlegscheiben 120 gesichert sind, an entsprechenden Aussparungen des Bremsscheibentopfes 112 befestigt. Hierbei können die Distanzbuchsen 116 in den Aussparungen des Topfes 112 radial gleiten, so daß zusammen mit dem axialen Spiel zwischen Distanzbuchsen 116 und Reibring 114 eine schwimmende Lagerung des Reibrings 114 realisiert ist.

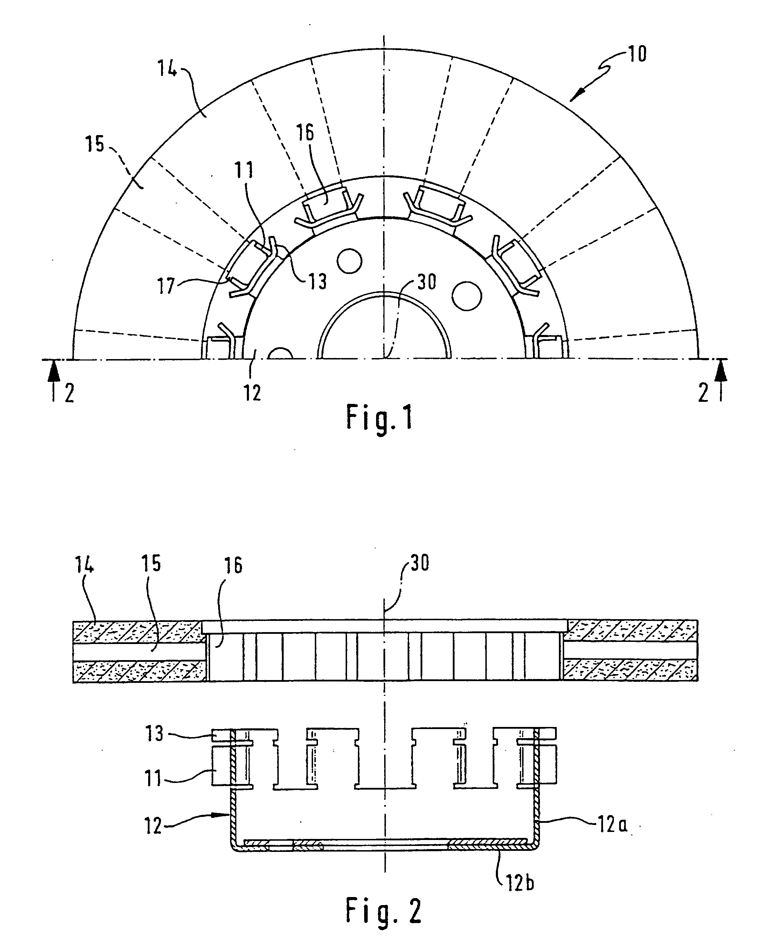

Die Fig. 1 und 2 zeigen ein erstes Ausführungsbeispiel der vorliegenden Erfindung. In Fig. 2 sind hierbei die Bauteile Bremsscheibentopf 12 und Reibring 14 separat, d.h. vor ihrer Montage dargestellt.

Die Bremsscheibe 10 umfaßt einen Bremsscheibentopf 12 aus Nirosta-Stahlblech und einen Reibring 14 aus faserverstärktem Kohlenstoffmaterial oder vorzugsweise aus faserverstärkter Verbundkeramik. Der Reibring 14 umgibt den Bremsscheibentopf koaxial bezüglich einer gemeinsamen Mittelachse 30. Der Bremsscheibentopf weist eine Topfwand 12a und einen Boden 12b auf. Der Bremsscheibentopf 12 besitzt an seiner Topfwand 12a durch Schneiden oder Stanzen und anschließendes Umbiegen erzeugte Laschen bzw. Zungen 11 und 13, welche bei Montage der Bremsscheibe in entsprechende Aussparungen 16 am Innendurchmesser des Reibrings 14 einbringbar sind. Zum Einbringen müssen die Laschen bzw. Zungen 11, 13 in einer bezüglich des Umfanges des Bremsscheibentopfes um etwa 90° umgebogenen Position sein. Dieser Zustand ist in Fig. 1 für die unteren Laschen 11 dargestellt.

Nach dem Zusammenfügen von Bremsscheibentopf 12 und Reibring 14 werden die oberen Zungen 13 wieder nach außen gebogen bzw. zurückgebogen, so daß der Reibring axial mit einem kleinen Spiel gesichert ist. Dieser Zustand der Laschen 13 ist in Fig. 1 dargestellt.

Ein bei einem Bremsvorgang auf den Reibring 14 wirkendes Drehmoment wird spielfrei und formschlüssig über die Flanken bzw. Wandungen der Aussparungen 16 auf die Zungen 11 und damit in den Bremsscheibentopf 12 übertragen. Die Zungen 11 sind derart dimensioniert, daß zwischen den Zungenenden und dem Boden der Ausnehmungen 16 ein Spalt 17 verbleibt. Hierdurch ist eine ungehinderte radiale Wärmeausdehnung des Bremsscheibentopfes 12 relativ zum Reibring 14 möglich. Die Eigenelastizität der Zungen 11 gewährleistet hierbei ein gleichmäßiges Anliegen aller Zungen an den Flanken der Aussparungen 16 des Reibrings auch bei eventuellen Teilungsfehlern oder Maßtoleranzen, welche bei der Fertigung der Bauteile auftreten können. Gestrichelt dargestellte Ventilationskanäle 15 sind mit Eintrittsöffnungen in den Aussparungen 16 ausgebildet, so daß eine optimale Kühlluftzufuhr erzielt werden kann.

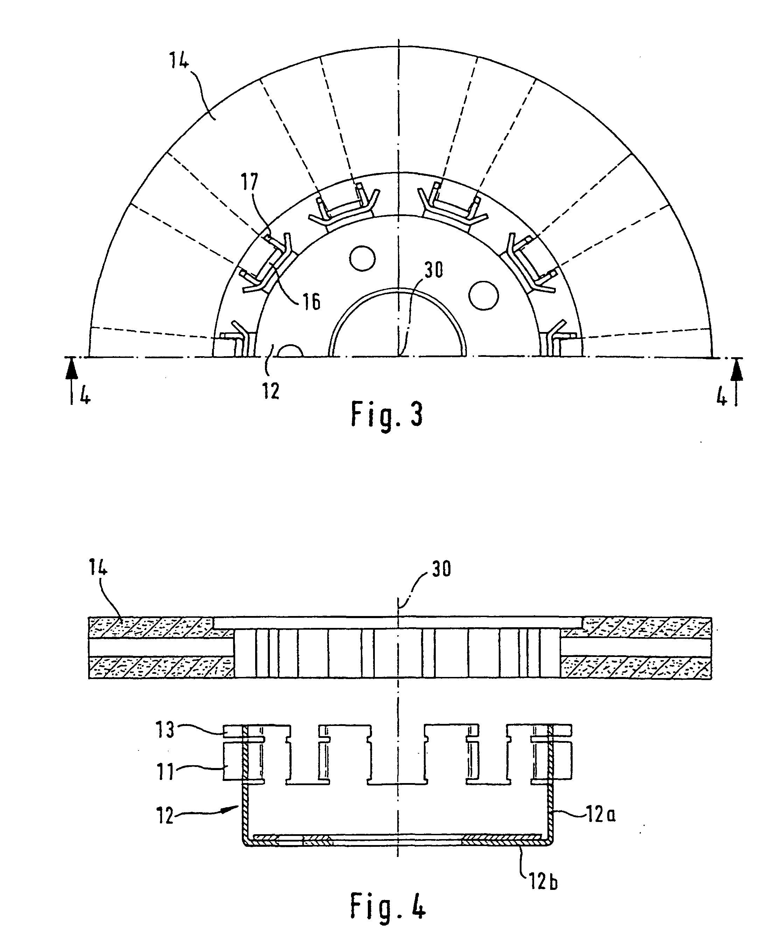

Eine zweite Ausführungsform der erfindungsgemäßen Bremsscheibe ist in den Figuren 3 und 4 dargestellt. Diese Ausführungsform entspricht im wesentlichen der ersten Ausführungsform, wobei zusätzlich Schlitze 17 als Verlängerungen der Ausnehmungen 16 des Reibrings 14 ausgebildet sind. Die Zungen bzw. Laschen 11 sind hierbei so geformt, daß sie in diese Schlitze 17 eingreifen. Es erweist sich hierbei als vorteilhaft, daß die zur optimalen Drehmomentübertragung zwischen Reibring 14 und Bremsscheibentopf 12 notwendige Spielfreiheit zwischen den Laschen 11 und den im Reibring ausgebildeten Aussparungen sehr einfach zu gewährleisten ist, da die Schlitzbreite in einfacher Weise der toleranzgeringen Blechstärke der Laschen 11 angepaßt werden kann. Die ungehinderte radiale Ausdehnung des Bremsscheibentopfes gegenüber dem Reibring im Falle einer Erwärmung ist dadurch gewährleistet, daß die Schlitze 17 etwas länger ausgebildet sind als die umgebogenen Zungen 11, so daß bei Eingreifen der Zungen 11 in die Schlitze 17 im Bodenbereich der Schlitze 17 ein Zwischenraum verbleibt.

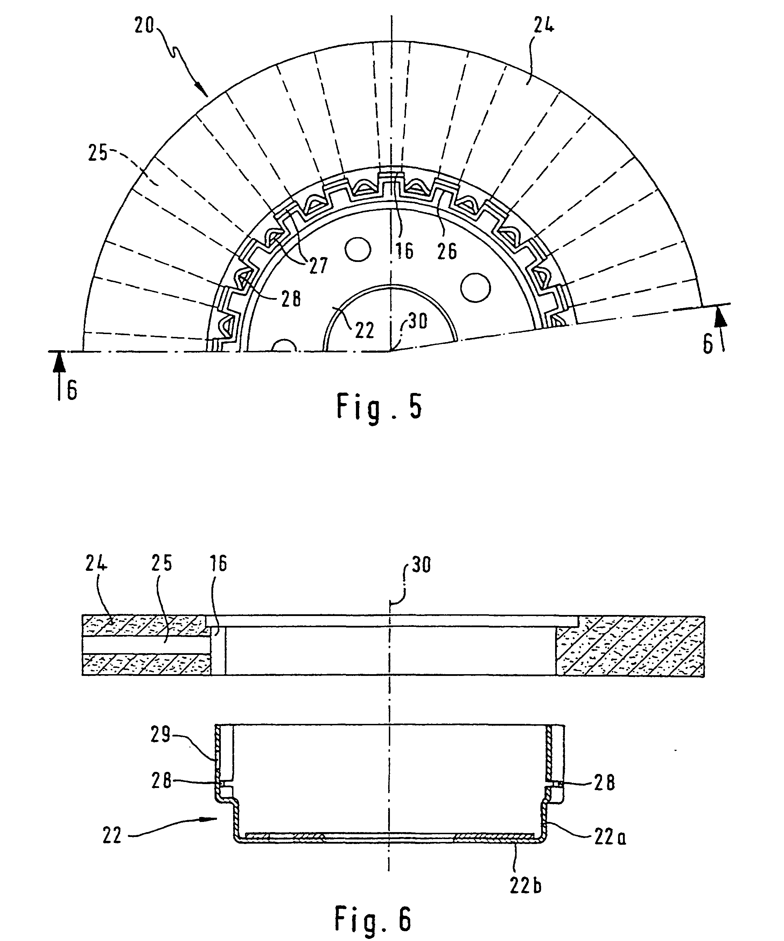

Ein drittes Ausführungsbeispiel einer erfindungsgemäßen Bremsscheibe ist in Fig. 5 und 6 dargestellt. Hierbei sind in Fig. 6 wiederum Bremsscheibentopf 22 und Reibring 24 vor ihrer Montage dargestellt.

In diesem Ausführungsbeispiel weist die Bremsscheibe 20 entsprechend der ersten und zweiten bevorzugten Ausführungsform einen Reibring 24 und einen Bremsscheibentopf 22 mit einer Topfwand 22a und einem Boden 22b, vorzugsweise aus den oben genannten Materialien, auf.

Der Bremsscheibentopf 22 weist auf seiner Topfwand 22a ein regelmäßiges. z.B. durch Rolieren oder Prägen erzeugtes, geschlossenes Zahnprofil 26 mit rechteckigem Querschnitt auf. Dieses Zahnprofil 26 greift in entsprechend geformte Aussparungen 16 am Innendurchmesser des Reibrings 24 ein, so daß eine spielfreie, formschlüssige Drehmomentübertragung zwischen Bremsscheibentopf 22 und Reibring 24 gewährleistet ist. Zwischenräume bzw. Spalte 27 zwischen dem Zahnprofil 26 und den jeweiligen Böden der Ausnehmungen 16 des Reibrings 24 ermöglichen eine ungehinderte radiale Wärmeausdehnung des Bremsscheibentopfes 22 gegenüber dem Reibring 24.

Die axiale Sicherung des Reibrings 24 an dem Bremsscheibentopf 22 wird durch sogenannte Durchstellungen oder Ausprägungen 28 gewährleistet, die in die Zahnprofil-Zwischenräume des Bremsscheibentopfes 22 eingebracht werden. Die Durchstellungen 28 sind hierbei unterhalb und oberhalb des in seiner Montagestellung angeordneten Reibrings 24 in den Bremsscheibentopf 22 geprägt. In Fig. 6 erkennt man Durchstellungen 28, die zweckmäßigerweise vor der Zusammenführung von Bremsscheibentopf 22 und Reibring 24 in die Zahnprofil-Zwischenräume des Bremsscheibentopfes 22 eingebracht werden. Nach Zusammenführung der Bauteile 22, 24 derart, daß der Reibring 24 auf den Durchstellungen 28 aufliegt, werden weitere Durchstellungen 28 oberhalb des Reibrings 24 in den Bremsscheibentopf 22 eingeprägt, so daß der Reibring 24 ein axiales Spiel besitzt. Diese weiteren Durchstellungen 28 sind gemäß dem Montagezustand der Fig. 6 in dieser Figur nicht eingezeichnet.

In Fig. 5, welche Bremsscheibentopf 22 und Reibring 24 im zusammengesetzten Zustand zeigt, sind diese weiteren Durchstellungen 28, die den Reibring 24 (gemäß der Perspektive der Fig. 6 nach oben) sichern, dargestellt. Das axiale Spiel des Reibrings ist so mittels der Positionierung der Durchstellungen 28 in einfacher Weise einstellbar.

Ventilationskanäle 25 sind wiederum gestrichelt dargestellt. Sie sind mit Eintrittsöffnungen in den Reibringaussparungen und entsprechenden Durchbrüchen 29 in der Außenfläche der Topfverzahnung ausgebildet, wodurch ein Kühllufteintritt in die Ventilationskanäle 25 gewährleistet ist.

## Patentansprüche

1. Bremsscheibe, insbesondere für Kraftfahrzeuge,
- mit einem topfförmigen, einen Wandungsbereich (12a, 22a) und einen Bodenbereich (12b, 22b) aufweisenden Bremsscheibentopf (12, 22),
- und einem den Bremsscheibentopf (12, 22) koaxial bezüglich einer gemeinsamen Mittelachse (30) umgebenden scheibenförmigen Reibring (14, 24),
- wobei der Reibring (14, 24) an seinem Innenumfang Aussparungen (16) aufweist, in welche an dem Wandungsbereich (12a, 22a) des Bremsscheibentopfes (12, 22) ausgebildete Vorsprünge (11, 26) zur spielfreien Übertragung eines auf den Reibring (14,24) wirkenden Drehmoments auf den Bremsscheibentopf (12, 22) eingreifen,
**dadurch gekennzeichnet,**
**daß** die in dem Reibring (14, 24) ausgebildeten Aussparungen (16) in ihrem Bodenbereich schlitzartige Verlängerungen (17) aufweisen.

2. Bremsscheibe nach Anspruch 1,
**dadurch gekennzeichnet,**
**daß** zur axialen Sicherung des Reibrings (14, 24) bezüglich des Bremsscheibentopfes (12, 22) elastisch verformbare Teile (13, 28) an dem Wandungsbereich (12a, 22a) des Bremsscheibentopfes (12, 22) ausgebildet sind.

3. Bremsscheibe nach einem der Ansprüche 1 oder 2,
**dadurch gekennzeichnet,**
**daß** die Vorsprünge (11) und die Teile (13) als mittels Stanzen oder Schneiden und anschließendem Umbiegen von Abschnitten der Wandung (12a) des Bremsscheibentopfes (12) erzeugte Laschen ausgebildet sind.

4. Bremsscheibe nach Anspruch 1,
**dadurch gekennzeichnet,**
**daß** der Reibring (14, 24) aus einem nichtmetallischen Werkstoff, und der Bremsscheibentopf (12, 22) aus einem metallischen Werkstoff besteht.

## Claims

1. Brake disc, in particular for motor vehicles,
- with a bowl-shaped brake-disc chamber (12, 22) having a wall region (12a, 22a) and a bottom region (12b, 22b),
- and with a disc-shaped friction ring (14, 24) surrounding the brake-disc chamber (12, 22) coaxially with respect to a common mid-axis (30),
- the friction ring (14, 24) having, on its inner circumference, clearances (16), into which projections (11, 26) formed on the wall region (12a, 22a) of the brake-disc chamber (12, 22) engage for the play-free transmission of a torque acting on the friction ring (14, 24) to the brake-disc chamber (12, 22),
**characterized**
**in that** the clearances (16) formed in the friction ring (14, 24) have slot-like prolongations (17) in their bottom region.

2. Brake disc according to Claim 1, **characterized in that** elastically deformable parts (13, 28) are formed on the wall region (12a, 22a) of the brake-disc chamber (12, 22) in order to secure the friction ring (14, 24) axially in relation to the brake-disc chamber (12, 22).

3. Brake disc according to one of Claims 1 or 2, **characterized in that** the projections (11) and the parts (13) take the form of tabs produced by means of stamping or cutting and subsequent bending-round from portions of the wall (12a) of the brake-disc chamber (12).

4. Brake disc according to Claim 1, **characterized in that** the friction ring (14, 24) consists of a non-metallic material and the brake-disc chamber (12, 22) of a metallic material.

## Revendications

1. Disque de frein, en particulier pour véhicules automobiles,
- avec un pot de frein à disque (12, 22) en forme de boîte comprenant une zone constituant une paroi (12a, 22a) et une zone constituant un fond (12b, 22b)
- et avec une bague de friction en forme de disque (14, 24) entourant le pot de frein à disque (12, 22) dans le sens coaxial par rapport à un axe médian commun (30),
- la bague de friction (14, 24) comprenant sur son pourtour intérieur des évidements (16), dans lesquels pénètrent des avancées (11, 26) formées sur la zone constituant une paroi (12a, 22a) du pot de frein à disque (12, 22) pour assurer une transmission sans jeu sur le pot de frein à disque (12, 22) d'un couple agissant sur la bague de friction (14, 24), **caractérisé en ce que** les évidements (16) pratiqués dans la bague de friction (14, 24) comprennent dans leur zone de fond des prolongements en forme de fentes (17).

2. Disque de frein selon la revendication 1, **caractérisé en ce que** pour le blocage axial de la bague de friction (14, 24) par rapport au pot de frein à disque (12, 22), des pièces pouvant subir une déformation élastique (13, 28) sont formées dans la zone constituant une paroi (12a, 22a) du pot de frein à disque (12, 22).

3. Disque de frein selon l'une quelconque des revendications 1 ou 2, **caractérisé en ce que** les avancées (11) et les pièces (13) sont formées par des languettes produites par poinçonnage ou par découpe suivie d'une pliure de sections de la paroi (12a) du pot de frein à disque (12).

4. Disque de frein selon la revendication 1, **caractérisé en ce que** la bague de friction (14, 24) se compose d'un matériau non-métallique et le pot de frein à disque (12, 22) d'un matériau métallique.
